Europäisches Patentamt

European Patent Office

Office européen des brevets

(11) Numéro de publication: **0 265 328 B1**

(12) **FASCICULE DE BREVET EUROPEEN**

(45) Date de publication de fascicule du brevet: **23.12.92** (51) Int. Cl.⁵: **H02J 7/34**

(21) Numéro de dépôt: **87402287.4**

(22) Date de dépôt: **13.10.87**

---

(54) **Système autonome d'alimentation électrique.**

---

(30) Priorité: **14.10.86 FR 8614232**

(43) Date de publication de la demande:
**27.04.88 Bulletin 88/17**

(45) Mention de la délivrance du brevet:
**23.12.92 Bulletin 92/52**

(84) Etats contractants désignés:
**BE CH DE ES GB IT LI NL SE**

(56) Documents cités:
**US-A- 3 443 115**
**US-A- 3 566 143**
**US-A- 3 987 352**

**PATENT ABSTRACTS OF JAPAN, vol. 6, no. 125 (P-127)[1003], 10 juillet 1982; & JP-A-57 50 029 (FUJI DENKI SEIZO K.K.) 24-03-1982**

(73) Titulaire: **SCHLUMBERGER INDUSTRIES**
**50, avenue Jean Jaurès**
**F-92120 Montrouge(FR)**

(72) Inventeur: **Juvin, Marc**
**8, rue de Lorraine**
**F-25000 Besançon(FR)**

(74) Mandataire: **Hasenrader, Hubert et al**
**Cabinet BEAU DE LOMENIE 55, rue d'Amsterdam**
**F-75008 Paris(FR)**

---

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un système autonome d'alimentation electrique

De façon plus précise l'invention a pour objet un tel système qui permette d'assurer le fonctionnement d'une installation électrique fonctionnant, essentiellement par appels importants de courant de durées limitées et qui confère de plus à l'installation électrique une autonomie de fonctionnement de plusieurs mois.

Il existe de plus en plus d'appareils, en partie électriques, qui, pour le fonctionnement de leur partie électrique, ne requièrent qu'une alimentation en énergie électrique intermittente. On peut citer comme exemple les bornes de stationnement pour contrôler le paiement de la taxe requise pour le stationnement de véhicules automobiles. De telles machines comportent des circuits électroniques qu'il faut alimenter et des moyens d'impression des tickets qui sont délivrés aux automobilistes après paiement de la taxe de stationnement afin de pouvoir faire la preuve du paiement effectué. Ces moyens d'impression consistent le plus souvent en un tête d'impression thermique. A chaque opération d'impression , l'alimentation des points d'impression provoque un appel de courant instantané important.

Pour l'alimentation des bornes de stationnement, une première solution consiste à utiliser le secteur à 110 ou 220 volts. Cette solution impose des travaux importants pour raccorder la machine au réseau de distribution d'électricité.

Une deuxième solution consiste à alimenter la machine par une batterie et à recharger périodiquement la batterie sur le réseau d'éclairage public, réseau qui est fixe mais alimenté seulement périodiquement (périodes d'éclairage). Cette solution requiert encore des travaux de raccordement au réseau d'éclairage public.

Une autre solution consiste à alimenter l'installation à directement l'aide d'une batterie, et à prévoir le rechargement en atelier de la batterie.

La solution la mieux adaptée réside bien sûr dans l'utilisation d'une alimentation électrique autonome. Cette alimentation doit avoir une autonomie de plusieurs mois, typiquement six mois. Cette exigence d'autonomie est bien sûr dictée par les impératifs d'abaissement du coût de maintenance des bornes de stationnement. Des piles électriques groupées en "batteries" permettent d'obtenir la tension requise et la capacité nécessaire à une telle autonomie. Cependant les piles ne sont pas des sources d'énergie électrique supportant des appels de courant importants. Selon les technologies mises en oeuvre, les piles ne peuvent fournir, pendant quelques secondes à quelques minutes, que des courants ne dépassant pas une valeur allant de la dizaine de mA à un Ampère pour les plus performantes. De plus, lors de la fourniture de tels courants la tension délivrée par la pile subit une chute d'autant plus élevée que l'intensité du courant délivré est grande. Il en résulte que, pour l'application considérée, une alimentation directe par piles est exclue.

Le document US-A-3 987 352 décrit un système de charge d'une batterie à partir d'une pile dans lequel la charge de la batterie est commandée par un circuit qui mesure en permanence. L'intensité du courant de charge et de décharge de la batterie. Un tel système de commande n'est pas adapté au cas où l'intensité du courant circulant vers la charge extérieure, par exemple les circuits d'une borne électrique de stationnement payant, peut varier dans des proportions très importantes.

Pour remédier à ces inconvénients, un objet de l'invention est de fournir un système d'alimentation électrique autonome qui présente une capacité élevée tout en autorisant des appels de courant importants.

Un autre objet de l'invention est de fournir un système d'alimentation électrique autonome qui présente de plus un encombrement réduit.

Selon l'invention, ce but est atteint par les caractéristiques de la revendication 1.

D'autres caractéristiques et avantages de l'invention apparaîtront plus clairement à la lecture de la description qui suit d'un mode de réalisation de l'invention donné à titre d'exemple non limitatif. La description se réfère au dessin annexé sur lequel :

la figure 1 est un schéma de principe du système autonome d'alimentation électrique selon l'invention;

La figure 2 montre sous forme de block-diagramme un mode préféré de réalisation du chargeur de batterie ; et

La figure 3 montre sous forme détaillée le mode de réalisation du chargeur de la figure 2.

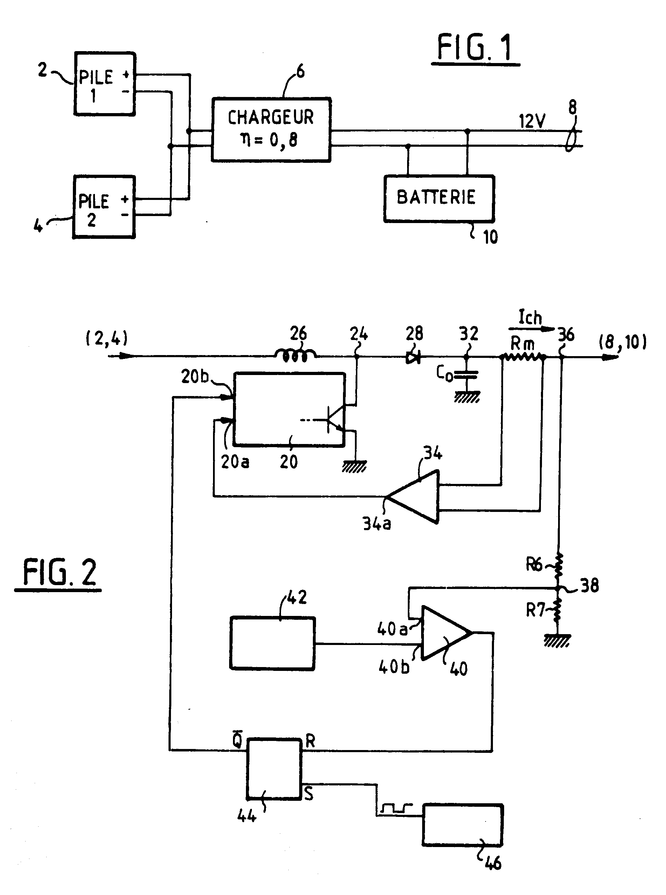

En se référant tout d'abord à la figure 1, on va décrire l'organisation générale du système autonome d'alimentation électrique selon l'invention. Il comprend deux piles 2 et 4 qui sont montées en parallèle à l'entrée d'un chargeur de batterie 6. La sortie du chargeur 6 est reliée aux bornes 8 d'utilisation du système d'alimentation. Entre le chargeur 6 et les bornes 8, une batterie d'accumulateur 10 est montée en tampon. La batterie 10 est du type au plomb. Elle délivre une tension nominale de 12 volts.

Chaque pile 2 ou 4 fournit une tension normale de 8,7 volts et présente une capacité suffisante pour assurer l'autonomie souhaitée Le chargeur 6 fournit un courant constant sous la tension de fin de charge de batterie préconisée. Sa tension de sortie peut varier entre 9 et 15 volts. Il est alimenté par un courant de 70 mA sous 7,4 volts. En fait, sa tension d'alimentation peut varier de 4,5 à 9 Volts. Le chargeur a un rendement de 80 % Si l'on admet que le rendement charge/décharge de la batterie 10 est égal à 90%, le rendement énergétique global du système d'alimentation est égal à 70%.

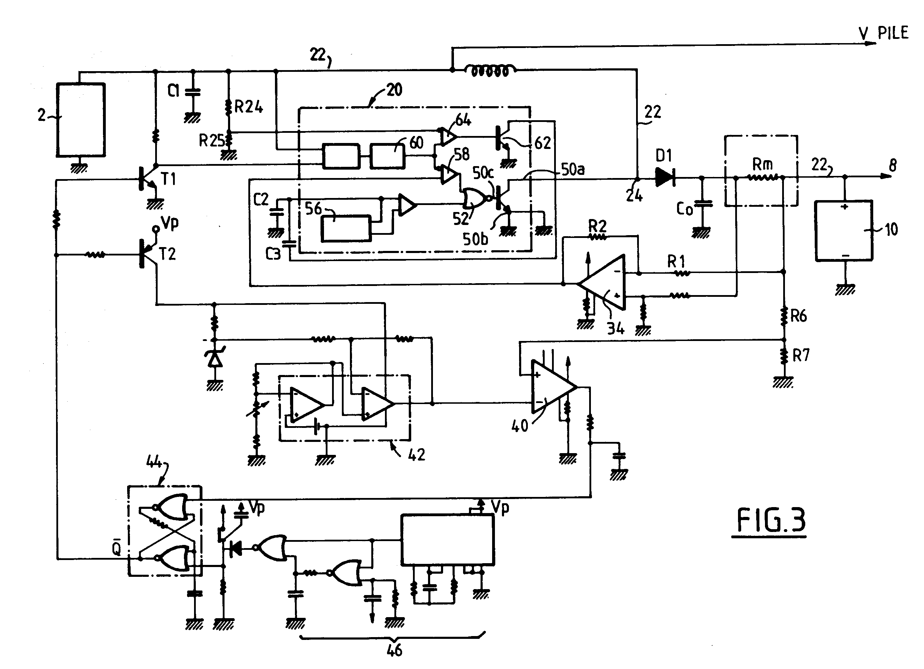

En se référant aux figures 2 et 3 on va décrire plus en détail le chargeur de batterie 6 de la figure 1.

Le chargeur 6 comprend un régulateur à découpage 20 qui est monté entre la masse et la ligne 22 qui relie le point commun 2, 4 des piles à la borne positive de la batterie et la borne positive d'utilisation (8,10).

Entre le point commun 2,4 et le point 24 de branchement du régulateur la ligne 22 comprend une self 26. Sur la ligne 22, entre le point 24 et le raccordement à la borne positive de la batterie on trouve successivement une diode 28 et une résistance Rm. En outre une capacité $C_0$ est montée entre la masse et le point 32 situé entre la diode 28 et la résistance Rm. Comme on l'expliquera plus en détails ultérieurement, le régulateur 20 est commandé pour délivrer un courant de charge constant. Dans ce but, les tensions prélevées aux bornes de la résistance Rm sont appliquées aux entrées d'un amplificateur opérationnel 34 monté en soustracteur. A la sortie 34a de l'amplificateur 34 on dispose donc d'une tension qui est représentative de l'intensité du courant de charge de la batterie. La sortie 34a de l'amplificateur 34 est relié à l'entrée 20a du régulateur 20. Pour mesurer la tension aux bornes de la batterie un diviseur de tension formé par les résistance $R_6$ et $R_7$ est monté entre la ligne 22 au point 36 et la masse. Le point intermédiaire 38 du diviseur de tension est relié à l'entrée 40a d'un comparateur 40. L'entrée 40a du caparateur reçoit donc une tension qui est représentative de la tension de batterie à chaque instant. La deuxième entrée 40b du comparateur reçoit une tension délivrée par un circuit 42 de référence de tension. Le circuit 42 délivre une tension qui est représentative de la tension d'arrêt de charge de la batterie, cette tension de référence étant compensée en température. Lorsque la tension de batterie atteint la valeur de référence,à la température environnante, le comparateur 40 délivre un signal qui est appliqué à l'entrée R d'une bascule 44. Un circuit d'horloge 46 délivre avec une périodicité fixe (par exemple deux heures) un signal de commande de recharge de la batterie. La sortie du circuit 46 est reliée à l'entrée S de la bascule 44. La sortie Q de la bascule 44 est reliée à l'entrée 20b du régulateur 20. Lorsque la sortie Q est au niveau 0, c'est-à-dire lorsque la recharge de la batterie a été commandée par le circuit 46 mais que la tension de batterie n'a pas encore atteint la valeur de référence, le régulateur est active. Au contraire, lorsque la sortie Q est au niveau 1, le régulateur 20 est au repos. Le régulateur 20 est du type à découpage. Il s'agit par exemple du régulateur RC 4193 de la société Raytheon. On expliquera ultérieurement plus en détail en référence à la figure 3 la structure du régulateur 20. Il suffit ici d'indiquer que, plus le rapport cyclique du signal de découpage délivrée par le régulateur est élevé. plus la tension aux bornes de la capacité $C_0$ est élevée. et donc plus la tension de charge est élevée.

Le fonctionnement du chargeur de la figure 2 est le suivant : on suppose que le circuit 46 vient de lancer un ordre de début de charge. La sortie Q de la bascule 44 passe au niveau 0 activant le régulateur 20. Le régulateur 20 provoque la charge de la batterie. Le courant de charge est mesuré en permanence par l'amplificateur 34 qui contrôle le régulateur 20 pour maintenir le courant de charge constant. La tension de la batterie est appliquée en permanence au caomparateur. Comme la charge de la batterie est effectuée à courant constant, la tension aux bornes de la batterie tend à augmenter au fur et à mesure de la charge de celle-ci.

Lorsque cette tension atteint la valeur de référence fournie par le circuit 42, par exemple 13,8V la sortie Q de la bascule 44 repasse à zéro et le régulateur 20 passe au repos.

En se référant à la figure 3 on va décrire plus en détail le chargeur 6. On a conservé sur la figure 3 les références des éléments apparaissant déjà sur la figure 2. Le régulateur 20 comprend un transistor 50 dont les électrodes d'émetteur et de collecteur 50a et 50b sont reliées au point 24 de la ligne 22 et à la masse et dont l'électrode de base 50c est reliée à la sortie d'une parte NON OU référence 52. Le transistor 50 fonctionne en interrupteur commandé par la tension délivrée par le circuit 52. La porte NON OU 52 reçoit sur une de ses entrées le signal délivré par un oscillateur 56 dont la fréquence fixe est réglée par la capacité $C_2$. Dans l'exemple considéré cette fréquence est égale à 55 kHz. Le régulateur 20 comprend encore un comparateur 58 qui reçoit sur une de ses entrées la tension délivrée par l'amplificateur 34 et sur son autre entrée une tension de référence délivrée par le circuit 60. On rappelle que le signal délivré par l'amplificateur 34 est représentatif du courant de charge de la batterie. Le gain de l'amplificateur 34 (résistances R1 et R2) est réglé de telle manière que, pour le courant de charge convenable, par exemple 30 mA, la tenion fournie par l'amplificateur 34 soit égale à la tension délivrée par le circuit 60, par exemple 1,3 Volts. On comprend ainsi que la fréquence du signal de commande du transistor 50 est fixe et égale à 55 kHz mais que le rapport cyclique de ce signal est modifié par le signal délivré par le comparateur 58.

Or, comme le circuit 58 délivre un signal qui est représentatif de l'écart du courant de charge par rapport à sa valeur de consigne (30 mA), cet ensemble constitue effectivement une boucle de régulation.

Le régulateur 20 met en oeuvre encore une autre fonction qui permet de résoudre le problème suivant : Le régulateur tel qu'il a été décrit précédemment a été étudié pour fonctionner avec des tensions moyennes de piles et de batterie et à une température ambiante normales. Or les tensions des piles peuvent être inférieures à la moyenne (inférieure à 5 Volts) .La tension de batterie peut être élevée (supérieure à 14 Volts) et la température ambiante peut descendre à -10½C.

Pour s'adapter à ces conditions anormales, la fréquence de découpage peut être diminuée en couplant au circuit oscillateur 56 la capacité $C_3$. La fréquence de découpage est alors ramenée à 25,5 kHz. Le couplage de la capacité $C_3$ est automatiquement réalisé à partir d'un circuit de détection. Ce circuit comprend un transistor 62 monté en interrupteur. La base 62a du transistor 60 reçoit un signal délivré par le comparateur 64. Le comparateur 64 reçoit sur une de ses entrées le signal de référrence délivré par le circuit 60 et d'autre part un signal représentatif de la tension de pile qui est fourni par le diviseur de tension formé par les résistances $R_{24}$ et $R_{25}$. Ce circuit est tel que, lorsque la tension de pile tombe en dessous d'une valeur prédéterminée, par exemple 5,85 Volts, le transistor 62 devient passant et couple la capacité $C_3$ au circuit oscillateur 56. La fréquence de découpage devient alors égal à 25,5 kHz comme indiqué précédemment.

Le reste du circuit est aisément compréhensible pour l'homme de l'art. On peut seulement noter les points suivants : la sortie Q de la bascule 44 commande l'activation du régulateur 20, lorsqu'elle est au niveau 0, par l'intermédiaire du transistor $T_1$ qui joue le rôle d'un interrupteur. Le circuit 42 qui fournit la tension de référence de charge de batterie, compensée en température, est alimenté par la tension de pile $V_p$ via le transistor $T_2$ qui fonctionne en interrupteur. Le circuit 42 n'est donc alimenté que pendant les phases de recharge de la batterie.

Il découle de la description précédente que le circuit autonome d'alimentation électrique correspond bien aux spécifications énoncées précédemment.

L'énergie électrique est fournie au circuit d'utilisation par la batterie. Cette énergie est donc délivrée sous une tension très stable, typiquement 12 Volts et autorise des appels de courant importants. De par sa structure, le régulateur de tension à découpage permet de réaliser un compromis entre les caractéristiques de débit des piles et un transfert d'énergie avec un rendement maximal même si les piles ont une tension faible par rapport à leur tension normale

En outre, il faut remarquer que la totalité de l'énergie électrique est fournie à la charge extérieure par la batterie d'accumulateurs et non par les piles. Cependant il faut préciser que dans le cas où la batterie alimentant la charge extérieure, la pile est en train de recharger la batterie, un courant de fuite fourni par la pile est appliqué aussi à la charge extérieure. Cependant, ce courant de fuite est négligeable par rapport au courant fourni par la batterie, et même dans ce cas on peut considérer, en première approximation, que la totalité de l'énergie électrique est fournie par la batterie à la charge extérieure.

En outre, en utilisant deux piles du type décrit précédemment, la borne de stationnement présente une autonomie de fonctionnement de six mois.

## Revendications

1. Système autonome d'alimentation électrique d'une charge extérieure comprenant au moins une pile (2, 4) pour fournir la quantité d'énergie électrique requise ; une batterie d'accumulateur (10), montée en tampon par rapport aux bornes d'utilisation (8) dudit système pour fournir les pointes de courant requises, ladite batterie alimentant seule la charge extérieure ; et un régulateur-chargeur de batterie (6) pour assurer le transfert d'énergie de ladite pile (2, 4) à ladite batterie (10), comprenant des moyens (Rm, 34, 20) pour adapter le régime de décharge de ladite pile à la consommation effective d'énergie sur ladite batterie, et des moyens (38, 42, 44, 46) pour maintenir l'état de charge de ladite batterie dans une plage réduite proche de la pleine charge ; caractérisé en ce que lesdits moyens de contrôle de la charge comprennent un circuit (46) pour fournir un signal impulsionnel à fréquence fixe dont chaque impulsion déclenche la charge de la batterie, ladite fréquence étant adaptée à la consommation du dispositif alimenté par ledit système, et des moyens pour interrompre la charge comprenant des moyens (42) pour élaborer un signal de référence caractéristique de la pleine charge de la batterie, des moyens pour élaborer un signal représentatif de la pleine charge de la batterie ($R_6$, $R_7$, 38), des moyens de comparaison (40) desdits signaux, et des moyens (44) pour interrompre, en fonction de ladite comparaison, la charge de la batterie et l'alimentation des circuits du régulateur-chargeur associés à la charge.

2. Système d'alimentation électrique autonome selon la revendication 1, caractérisé en ce que les moyens pour adapter la charge comprennent des moyens (Rm, 34, 20) pour maintenir le courant de charge (Ich) de la batterie à une valeur sensiblement constante.

3.  Système autonome d'alimentation électrique selon l'une quelconque des revendications 1 et 2, caractérisé en ce que ledit régulateur-chargeur (6) comprend un circuit de régulation du type à découpage (20).

4.  Système autonome d'alimentation électrique selon l'une quelconque des revendications 1 à 3, caractérisé en ce que les moyens pour maintenir sensiblement constant le courant de charge comprennent des moyens (Rm, 34) pour élaborer un signal représentatif du courant de charge, des moyens (58) pour comparer ledit signal à une valeur de consigne, et des moyens (52) pour modifier le rapport cyclique du signal périodique de découpage en fonction du résultat de ladite comparaison.

5.  Système autonome d'alimentation électrique selon l'une quelconques des revendications 1 à 4, caractérisé en ce que lesdits moyens pour élaborer un signal de référence caractéristique de la pleine charge sont compensés en température.

## Claims

1.  Self-contained electricity power supply system for feeding an external load comprising at least one primary cell (2, 4) for providing the required quantity of electrical energy; a rechargeable battery (10) mounted as a buffer relative to the output terminals (8) of said system in order to supply the required current peaks, said battery providing the entire power supply to said external load; and a battery regulator/charger (6) for transferring energy from said primary cell (2, 4) to said rechargeable battery (10), said regulator/charger including means (Rm, 34, 20) for matching the discharge from said primary cell to the effective consumption of energy from said rechargeable battery, and means (38, 42, 44, 46) for maintaining the charge condition of said rechargeable battery within a narrow range close to full charge; characterized in that said charge-control means include a circuit (46) for providing a pulse signal at a fixed frequency with each pulse triggering battery charging, said frequency being adapted to the energy consumed by said system, and means for interrupting charging including means (42) for generating a reference signal representative of the rechargeable battery being in full charge, means for generating a signal representative of the battery ($R_6$, $R_7$, 38) being in full charge, means (40) for comparing said signals, and means (44) responding to said comparison to switch off rechargeable battery charging and to switch off those circuits of the regulator/charger which are associated with charging.

2.  Self-contained electricity power supply system according to claim 1, characterized in that the means for adapting charging include means (Rm, 34, 20) for maintaining the charging current (Ich) to the rechargeable battery at a substantially constant value.

3.  Self-contained electricity power supply system according to any one of claims 1 and 2, characterized in that said regulator/charger (6) includes a chopper-type regulator circuit (20).

4.  Self-contained electricity power supply system according to any one of claims 1 to 3, characterized in that the means for maintaining the charging current substantially constant comprise means (Rm, 34) for generating a signal representative of the charging current, means (58) for comparing said signal with a reference value, and means (52) for modifying the duty ratio of the periodic chopper signal as a function of the result of said comparison.

5.  Self-contained electricity power supply system according to any one of claims 1 to 4, characterized in that said means for generating a reference signal representative of full charge are temperature compensated.

## Patentansprüche

1.  Autonomes Stromversorgungssystem für eine äußere Last, bestehend aus:
    - mindestens einer Zelle (2, 4) zur Lieferung der verlangten elektrischen Energiemenge;
    - einer Akkumulatoren-Batterie (10), angeordnet als Puffer an den Verbraucherklemmen (8) des Systems, um die verlangten Spitzenströme zu liefern, wobei diese Batterie allein die äußere Last speist; und
    - einen Batterie-Laderegler (6) um die Energieübertragung der Zelle (2, 4) zur Batterie (10) zu besorgen, bestehend aus Mitteln (Rm, 34, 20) zur Anpassung der Betriebsweise der Entladung dieser Zelle an den tatsächlichen Energieverbrauch der Batterie, und aus Mitteln (38, 42, 44, 46) um den Ladezustand der Batterie in einem engen Bereich nahe der Voll-Ladung aufrechtzuerhalten,
**dadurch gekennzeichnet,** daß

- die Mittel zur Steuerung der Ladung eine Schaltung (46) aufweisen zur Lieferung eines Impulssignals fester Frequenz, von dem jeder Impuls die Ladung der Batterie auslöst, wobei die Frequenz dieses Signals an den Verbrauch des durch das Stromversorgungssystem gespeisten Geräts angepaßt ist,
- die Mittel zur Unterbrechung der Ladung aus Mitteln (42) bestehen zur Bildung eines Bezugssignals, das für die Voll-Ladung der Batterie kennzeichnend ist,
- aus Mitteln ($R_6$, $R_7$, 38) zur Bildung eines Signals, das die Voll-Ladung der Batterie angibt,
- aus Vergleichsmitteln (40) zum Vergleich dieser Signale, und
- aus Unterbrechungsmitteln (44), die in Übereinstimmung mit dem Ergebnis des Vergleichs die Ladung der Batterie und die Speisung der Schaltungen des Batterie-Ladereglers, die an der Batterie-Ladung beteiligt sind, unterbrechen.

2. Autonomes Stromversorgungssystem nach Anspruch 1,
dadurch gekennzeichnet, daß
die Mittel zur Batterie-Ladung aus Mitteln (Rm, 34, 20) zur Aufrechterhaltung eines Batterie-Ladestroms (Ich) auf einen im wesentlichen konstanten Wert bestehen.

3. Autonomes Stromversorgungssystem nach einem der Ansprüche 1 oder 2,
dadurch gekennzeichnet, daß
der Batterie-Laderegler (6) eine Reglerschaltung vom Schaltertyp (20) aufweist.

4. Autonomes Stromversorgungssystem nach einem der Ansprüche 1 bis 3,
dadurch gekennzeichnet, daß
die Mittel zur Aufrechterhaltung eines im wesentlichen konstanten Ladestroms aufweisen:
Mittel (Rm, 34) zur Schaffung eines den Ladestrom kennzeichnenden Signals,
Mittel (58) zum Vergleich dieses Signals mit einem Sollwert, und
Mittel (52) zur Änderung des Tastverhältnisses des Schaltsignals als Funktion des Ergebnisses des Vergleichs.

5. Autonomes Stromversorgungssystem nach einem der Ansprüche 1 bis 4,

dadurch gekennzeichnet, daß
die Mittel zur Bildung eines den Voll-Ladezustand kennzeichnenden Signals temperaturkompensiert sind.

## FIG. 1

## FIG. 2

FIG.3

EP 0 265 328 B1